# EUROPÄISCHE PATENTANMELDUNG

(11) **EP 2 146 101 A2**
(43) Veröffentlichungstag der Anmeldung: **20.01.2010**
(21) Anmeldenummer: 08017422.0
(22) Anmeldetag: 02.10.2008
(51) Int. Cl.: F16B 7/04

(54) **Verbindungselement**

(30) Priorität: 17.07.2008 EP 08012930
(71) Anmelder: HEWI HEINRICH WILKE GMBH, 34454 Bad Arolsen (DE)
(72) Erfinder: Dziuk, Richard, 34454 Bad Arolsen (DE); Perrot, Philippe, 34474 Diemelstadt (DE)
(74) Vertreter: Manitz, Finsterwald & Partner GbR

(57) **Zusammenfassung**

Es wird ein Verbindungselement zum Verbinden eines Rohrabschnitts (400) mit wenigstens einem weiteren Element zur Verfügung gestellt. Das Verbindungselement weist einen in den Rohrabschnitt einsteckbaren Grundkörper (100) und wenigstens ein Verstellelement (114) auf, durch das der Grundkörper (100) zwischen einem Montagezustand und einem aufgeweiteten Verbindungszustand verstellbar ist. Der Grundkörper (100) weist einen ersten Klemmabschnitt (116) und einen zweiten Klemmabschnitt (118) auf, welche relativ zueinander beweglich sind, wobei das Verstellelement (114) in dem ersten Klemmabschnitt (116) entlang einer Verstellachse beweglich gelagert ist. Eine Wirkfläche des Verstellelements kann derart mit einer dem zweiten Klemmabschnitt (118) zugeordneten Angriffsfläche in Eingriff gebracht werden, dass der Querschnitt des Grundkörpers sowohl in Richtung der Verstellachse als auch quer dazu erweitert wird.

## Beschreibung

Die vorliegende Erfindung betrifft ein Verbindungselement zum Verbinden eines Rohrabschnitts mit wenigstens einem weiteren Element, insbesondere zum stirnseitigen Verbinden zweier Handlaufabschnitte, mit einem in den Rohrabschnitt einsteckbaren Grundkörper und wenigstens einem Verstellelement, durch das der Grundkörper zwischen einem Montagezustand, welcher ein Einstecken und Herausziehen des Grundkörpers in Bezug auf den Rohrabschnitt ermöglicht, und einem aufgeweiteten Verbindungszustand, in welchem der eingesteckte Abschnitt des Grundkörpers herausziehsicher in dem Rohrabschnitt gehalten ist, verstellbar ist.

Ein derartiges Verbindungselement kann beispielsweise ein Bestandteil eines Handlaufsystems sein, bei welchem eine Anzahl von rohrförmigen Griffelementen miteinander verbunden werden, um eine Handlaufstange mit einer gewünschten Gesamtlänge zu erhalten. Dadurch, dass bei Kopplung zweier Rohrabschnitte der Grundkörper in die Rohrabschnitte eingesteckt und in diesen verklemmt wird, ist das Verbindungselement im Wesentlichen vollständig im Inneren der Rohrabschnitte verborgen, wodurch eine optisch ansprechende Gestaltung des Handlaufsystems möglich ist. Bei einem derartigen Handlaufsystem können auch Verbindungselemente vorgesehen sein, die nicht zur Kopplung zweier Rohrabschnitte, sondern zur Kopplung eines Rohrabschnitts mit einem separaten Funktionselement dienen. Beispielsweise kann eine Eckumlenkung oder ein abschließendes Zierelement direkt an einen Endbereich des Verbindungselements angeformt sein.

Problematisch ist oftmals die Tatsache, dass die Abmessungen der einzelnen Rohrabschnitte mit Fertigungstoleranzen behaftet sind, so dass sich an der Stoßkante zwischen zwei Rohrabschnitten eine Stufe ausbilden kann, welche das äußere Erscheinungsbild der Handlaufstange beeinträchtigt und zu einem verringerten Komfort bei der Benutzung führt.

Es ist daher eine Aufgabe der Erfindung, eine stabile und zuverlässige Verbindung zwischen zwei Rohrabschnitten oder einem Rohrabschnitt und einem weiteren Element zu schaffen, welche das vorstehend geschilderte Problem der Stufenbildung minimiert.

Diese Aufgabe wird durch ein Verbindungselement mit den Merkmalen des Anspruchs 1 gelöst.

Erfindungsgemäß weist der Grundkörper wenigstens einen ersten und einen zweiten Klemmabschnitt auf, welche relativ zueinander beweglich sind, wobei das Verstellelement in dem ersten Klemmabschnitt entlang einer vorbestimmten Verstellachse beweglich gelagert ist und eine Wirkfläche aufweist, die mit einer dem zweiten Klemmabschnitt zugeordneten Angriffsfläche in Eingriff bringbar ist, um den Querschnitt des Grundkörpers sowohl in Richtung der Verstellachse als auch quer dazu zu erweitern.

Dadurch, dass der Querschnitt des Grundkörpers nicht nur in einer einzelnen Richtung, sondern in mehreren Richtungen aufgeweitet wird, wird die haltende Klemmkraft in günstiger Weise auf die innere Umfangsfläche des Rohrabschnitts verteilt. Außerdem werden zwei zu verbindende Rohrabschnitte durch die Aufweitung des Verbindungselements in mehreren Richtungen automatisch auf eine gemeinsame Längsachse zentriert, so dass eine eventuelle Stufe an der Stoßkante relativ gleichmäßig über den gesamten Umfang der Rohrabschnittsenden verteilt ist. Eine gleichmäßig über den Umfang verteilte Stufe - von dann entsprechend geringerer Höhe - wirkt wesentlich weniger störend als beispielsweise eine lokal begrenzte Stufe stärkerer Ausprägung.

Mögliche Weiterbildungen der Erfindung sind in den abhängigen Ansprüchen, der Zeichnung sowie der Beschreibung angegeben.

Die Aufweitung des Grundkörpers in mehreren Richtungen bei Verschiebung des Verstellelements in lediglich einer einzigen Richtung kann in vorteilhafter Weise durch eine besondere Gestaltung der Wirkfläche des Verstellelements und der mit dieser zusammenwirkenden, dem zweiten Klemmabschnitt zugeordneten Angriffsfläche erreicht werden. Die Wirkfläche des Verstellelements oder die dem zweiten Klemmabschnitt zugeordnete Angriffsfläche kann beispielsweise gewölbt ausgebildet oder in Bezug auf die Verstellachse geneigt sein. Es können auch beide Flächen entsprechend gewölbt ausgebildet oder gegenüber der Verstellachse geneigt sein. Verschiedene Kombinationen von Flächenwölbungen und Flächenneigungen sind vorstellbar, um eine Verteilung der Druckkraft in mehrere Richtungen zu erzielen. Diesbezügliche Beispiele sind in der Figurenbeschreibung erwähnt.

Gemäß einer bevorzugten Ausführungsform umfasst der zweite Klemmabschnitt wenigstens zwei separate Unterabschnitte mit diesen entsprechend zugeordneten Angriffsflächen, wobei die Unterabschnitte quer zu der Verstellachse relativ zueinander beweglich sind, um eine leichte Aufweitbarkeit des Grundkörpers in Querrichtung zu gewährleisten. Die separaten Unterabschnitte können beispielsweise durch einen Längsschlitz voneinander getrennt sein, welcher durch den zweiten Klemmabschnitt hindurch verläuft. Die gesamte Länge des Grundkörpers kann so für eine quer zur Verstellachse gerichtete Klemmwirkung genutzt werden.

Das Verstellelement kann eine Madenschraube mit einer konisch geformten Endfläche sein, die in einem durchgehenden Gewindeloch des ersten Klemmabschnitts aufgenommen ist. Eine derartige Madenschraube ist einfach und kostengünstig herstellbar und ermöglicht durch die kegelförmige Endflächenform eine erwünschte Kraftumlenkung von der Verstellachse weg.

Gemäß einer zweckmäßigen Ausgestaltung entspricht die Querschnittsform der dem zweiten Klemmabschnitt zugeordneten Angriffsfläche wenigstens abschnittsweise der Querschnittsform der konisch geformten Endfläche der Madenschraube. Der zweite Klemmabschnitt kann beispielsweise schräg zur Verstellachse verlaufende Oberflächenabschnitte aufweisen, welche in ihrem Neigungsgrad dem Konus der Endfläche der Madenschraube entsprechen, so dass sich ein im Wesentlichen linienförmiger Kraftübertragungsbereich zwischen Madenschraube und zweitem Klemmkörper ausbildet. Der Konus ermöglicht insbesondere eine Kraftübertragung in zwei voneinander weg weisende Richtungen quer zur Verstellachse. Alternativ kann auch zwischen der Madenschraube und dem zweiten Klemmabschnitt ein zusätzliches Kraftübertragungselement oder eine Anordnung von mehreren Kraftübertragungselementen eingefügt sein.

Bei einer Ausführungsform der Erfindung umfasst der Grundkörper ein weiteres Verstellelement, wobei jedes der zwei Verstellelemente einem von zwei zu verbindenden Rohrabschnitten zugeordnet ist. Hierdurch wird die Zuverlässigkeit der Verbindung erhöht, da die haltende Druckkraft jeweils vom Verstellelement ausgeht und somit jedem Rohrabschnitt ein Kraftzentrum zugeordnet ist.

Vorzugsweise sind der erste und der zweite Klemmabschnitt elastisch miteinander gekoppelt. Dies ist deshalb vorteilhaft, da sich so bei einem Zurückstellen des Verstellelements der erste und der zweite Klemmabschnitt automatisch wieder einander annähern und sich somit der Querschnitt des Grundkörpers wieder verringert. Die Verbindung der beiden Rohrabschnitte kann daher auf einfache Weise wieder gelöst werden, beispielsweise zum Abmontieren des Handlaufs oder bei einem Austausch eines einzelnen Handlaufelements. Zudem wird die Anzahl der für das Verbindungselement benötigten Einzelteile auf ein Minimum reduziert, was die Handhabung durch einen Monteur vereinfacht.

Gemäß einer Ausführungsform weist der Grundkörper einen im Wesentlichen rechteckigen Querschnitt auf. Der Grundkörper kann beispielsweise als Vierkantrohr ausgebildet sein und somit zum Verbinden von ebenfalls als Vierkantrohre ausgebildeten Handlaufelementen dienen. Ein Vierkantrohr ist leicht zu fertigen und kann auf einfache Weise an den Umfang der Rohrabschnitte des zugehörigen Handlaufsystems angepasst werden.

Der erste und der zweite Klemmabschnitt können auf jeder Seite durch zwei sich stirnseitig durch den Grundkörper hindurch erstreckende Sackschlitze voneinander getrennt sein, welche in Richtung der Verstellachse gegeneinander versetzt sind und in einem vorbestimmten Zentralbereich des Grundkörpers überlappen. Durch die einfach vorzusehenden Sackschlitze kann an jeder Seite des Grundkörpers eine im Wesentlichen S-förmige Verbindungsstrebe zwischen dem ersten und dem zweiten Klemmabschnitt geschaffen werden. Dadurch wird eine elastische, aber dennoch stabile Kopplung zwischen dem ersten und dem zweiten Klemmabschnitt erreicht, ohne dass hierzu zusätzliche Komponenten wie z.B. Federn notwendig wären.

Wie vorstehend erläutert muss die Wirkfläche des Verstellelements nicht in direktem Kontakt mit dem zweiten Klemmabschnitt stehen. Es kann z.B. für bestimmte Konfigurationen zweckmäßig sein, zwischen der Wirkfläche des Verstellelements und dem zweiten Klemmabschnitt wenigstens zwei Übertragungsstücke anzuordnen, welche eine von der Wirkfläche des Verstellelements ausgeübte Druckkraft auf den zweiten Klemmabschnitt übertragen. Dadurch werden die Gestaltungsmöglichkeiten hinsichtlich des Zusammenwirkens zwischen Wirkfläche und Angriffsfläche erweitert. Insbesondere können die Übertragungsstücke einen von der Rechteckform abweichenden Querschnitt aufweisen. Beispielsweise kann es sich um zylindrische Stäbe oder Stäbe mit dreieckigem Querschnitt handeln, welche somit die gewölbte oder geneigte Angriffsfläche zur Verfügung stellen. Dies kann insbesondere deshalb vorteilhaft sein, da es gegebenenfalls einfacher ist, ein separates Teil mit geneigter oder gewölbter Fläche herzustellen als den Grundkörper selbst mit einer derartigen Fläche zu gestalten.

Gemäß einer Ausgestaltung der Erfindung ist der Grundkörper als geschlitzter Block ausgebildet. Dies gewährleistet einerseits eine leichte und kostengünstige Herstellbarkeit und andererseits eine hohe Verbindungsstabilität.

Vorzugsweise besteht der Grundkörper aus einem elastischen Material, beispielsweise aus Zink-Druckguss, Edelstahl oder aus glasfaserverstärktem Kunststoff. Die elastische Ausbildung des gesamten Grundkörpers unterstützt die Verteilung der Klemmkraft in möglichst viele Richtungen und trägt zudem zur Lösbarkeit der Verbindung bei.

Gemäß einer weiteren Ausgestaltung der Erfindung weist der Grundkörper wenigstens zwei und insbesondere vier nach außen abstehende Vorsprungsabschnitte auf. Die Vorsprungsabschnitte können sich beispielsweise in den Eckbereichen eines als Vierkantrohr ausgebildeten Handlaufelements abstützen und bei einem Druck des Verstellelements auf einen zwischen den Vorsprungsabschnitten befindlichen - somit unabgestützten - Abschnitt des Grundkörpers eine jeweils gegen den Eckbereich gerichtete Diagonalkraft bewirken. Durch derartige auf die vier Ecken des Vierkantrohrs ausgeübte Diagonalkräfte kann eine besonders günstige Zentrierwirkung zwischen dem Verbindungselement und dem Vierkantrohr und somit zwischen zwei zu verbindenden Vierkantrohren erzielt werden.

Die Vorsprungsabschnitte können beispielsweise als Spreizflügel ausgebildet sein, welche sich von einem im Wesentlichen rechtwinklig zur Verstellachse ausgerichteten Zentralabschnitt des ersten Klemmabschnitts und/oder des zweiten Klemmabschnitts weg erstrecken und welche in Bezug auf die Verstellachse geneigt sind. Vorzugsweise weisen der erste und der zweite Klemmabschnitt jeweils zwei Spreizflügel auf, welche zueinander in einem Winkel von etwa 90° ausgerichtet sind und welche in einem Winkel von etwa 45° in Bezug auf die Verstellachse geneigt sind. Es ergibt sich in diesem Fall ein X-förmiger Querschnitt des Grundkörpers, der es ermöglicht, dass sich das Verbindungselement bei einem Verstellen der Klemmabschnitte relativ zueinander in die Ecken eines Vierkantrohrs einspreizt und somit zentriert in diesem gehalten wird.

Gemäß einer besonderen Ausführungsform sind der erste Klemmabschnitt und der zweite Klemmabschnitt als im Wesentlichen U-förmige Profilelemente ausgebildet, welche schräg voneinander weg weisende Schenkelabschnitten aufweisen. Das Verbindungselement ist in diesem Fall besonders kostengünstig herstellbar, da die U-förmigen Profilelemente als einfache Stanz-/ Biegeteile gefertigt werden können.

Das Verstellelement kann gemäß einer Ausführungsform der Erfindung als Madenschraube ausgebildet sein, die einen Gewindeabschnitt und einen zylindrischen Führungsabschnitt aufweist, wobei zwischen dem Gewindeabschnitt und dem zylindrischen Führungsabschnitt eine die Wirkfläche bildende Ansatzschulter ausgebildet ist. Mittels des Gewindeabschnitts kann die Madenschraube in ein in dem ersten Klemmabschnitt ausgebildetes durchgehendes Gewindeloch eingeschraubt werden. Der Führungsabschnitt kann sich durch eine in dem zweiten Klemmabschnitt ausgebildete Durchgangsbohrung erstrecken und in dieser geführt sein. Eine derartige Führung der Madenschraube erhöht die Gesamtstabilität des Verbindungselements und verhindert ein unerwünschtes Verrutschen oder Verspannen der beiden Klemmabschnitte gegeneinander. Die Ansatzschulter vermittelt die Verstellkraft von der Madenschraube auf den zweiten Klemmabschnitt, wobei ein zwischengeschaltetes Übertragungsstück, wie z.B. eine Beilagscheibe, vorgesehen sein kann.

Die Erfindung wird im Folgenden beispielhaft unter Bezugnahme auf die Zeichnung beschrieben. Es zeigen:
- Fig. 1: eine perspektivische Ansicht eines erfindungsgemäßen Verbindungselements gemäß einer ersten Ausführungsform;
- Fig. 2: eine Ansicht des Verbindungselements gemäß Fig. 1 von vom;
- Fig. 3: eine Ansicht des Verbindungselements gemäß Fig. 1 von der Seite;
- Fig. 4: eine perspektivische Ansicht des Verbindungselements gemäß Fig. 1, welches teilweise in einen Rohrabschnitt eines Handlaufsystems eingesteckt ist;
- Fig. 5: eine perspektivische Ansicht eines erfindungsgemäßen Verbindungselements gemäß einer zweiten Ausführungsform;
- Fig. 6: eine Ansicht des Verbindungselements gemäß Fig. 5 von vom;
- Fig. 7: eine Ansicht des Verbindungselements gemäß Fig. 5 von der Seite;
- Fig. 8: eine perspektivische Ansicht eines erfindungsgemäßen Verbindungselements gemäß einer dritten Ausführungsform;
- Fig. 9: eine Schnittansicht des Verbindungselements gemäß Fig. 8 von vorn;
- Fig. 10: eine Schnittansicht des Verbindungselements gemäß Fig. 8 von der Seite; und
- Fig. 11: eine perspektivische Ansicht des Verbindungselements gemäß Fig. 8, welches teilweise in einen Rohrabschnitt eines Handlaufsystems eingesteckt ist;

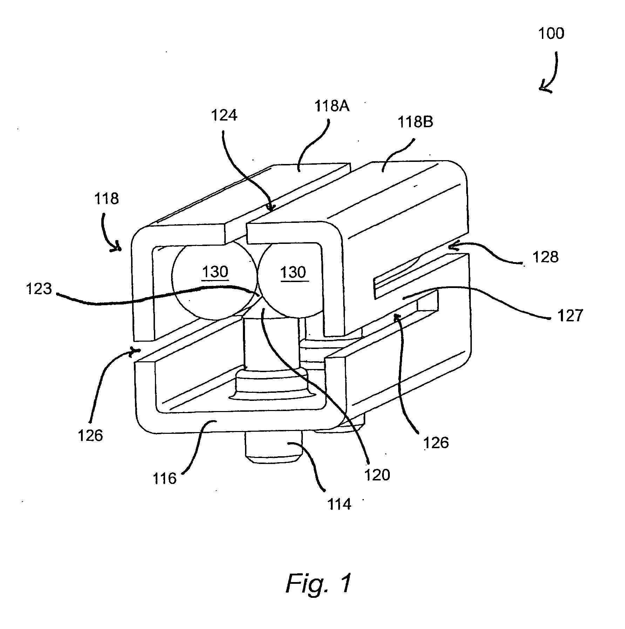

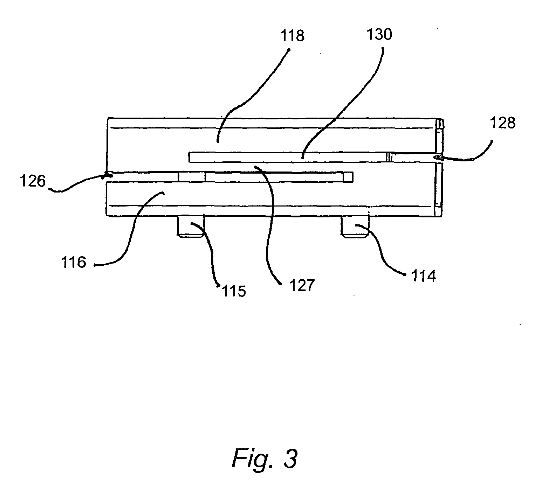

In den Fig. 1 bis 3 ist eine erste Ausführungsform eines erfindungsgemäßen Verbindungselements dargestellt. Das Verbindungselement umfasst einen Grundkörper 100, der hier als Vierkantrohr mit zwei Stirnflächen und insgesamt vier Seitenflächen ausgebildet ist. Grundsätzlich kann der Grundkörper 100 je nach Anwendung ein Gussteil oder ein Stanz-Biegeteil sein. Der Grundkörper 100 ist in einen ersten Klemmabschnitt 116 und einen zweiten Klemmabschnitt 118 unterteilt, wobei der zweite Klemmabschnitt 118 zwei voneinander getrennte Unterabschnitte 118A, 118B aufweist. Wie in Fig. 1 zu erkennen ist, weist der erste Klemmabschnitt 116 einen im Wesentlichen U-förmigen Querschnitt auf, während die beiden Unterabschnitte 118A, 118B des zweiten Klemmabschnitts 118 ein im Wesentlichen L-förmiges Profil aufweisen. Ein Längsschlitz 124, welcher sich an der Oberseite des Grundkörpers 100 durch den gesamten zweiten Klemmabschnitt 118 hindurch erstreckt, bewirkt die Trennung der beiden Unterabschnitte 118A, 118B des zweiten Klemmabschnitts 118. Um einen stabilen Zusammenhalt des Grundkörpers 100 zu gewährleisten, sind der erste Klemmabschnitt 116 und der zweite Klemmabschnitt 118 nicht vollständig voneinander getrennt, sondern sie sind an zwei gegenüberliegenden Seiten des Grundkörpers 100 jeweils durch eine Verbindungsstrebe 127 aneinander gekoppelt. Wie in den Figuren zu erkennen ist, sind die Verbindungsstreben 127 durch S-förmige Holme gebildet, welche jeweils dadurch gebildet sind, dass zwei sich stirnseitig durch den Grundkörper 100 hindurch erstreckende, relativ zueinander versetzte Sackschlitze 126, 128 vorgesehen sind.

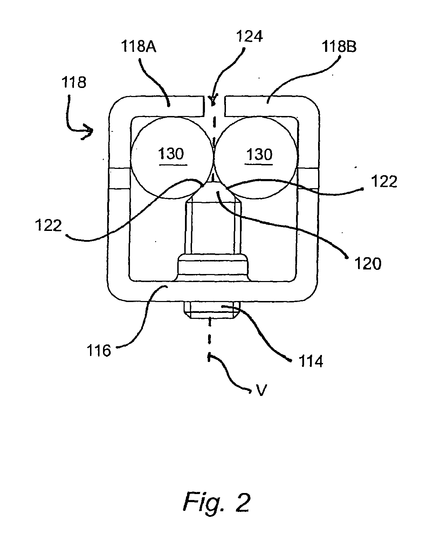

Der erste Klemmabschnitt 116 weist an der Unterseite zwei durchgehende Gewindelöcher auf, in denen jeweils ein als Madenschraube mit einer konisch geformten Endfläche ausgebildetes Verstellelement 114, 115 aufgenommen ist. Die Madenschrauben 114, 115 können mit Hilfe eines von außen herangeführten Werkzeugs in den Gewindelöchern gedreht und so in Richtung einer Verstellachse V (Fig. 2) verstellt werden.

In den beiden dem zweiten Klemmabschnitt 118 zugeordneten Eckbereichen des Grundkörpers 100 ist jeweils ein Übertragungsstück 130 angeordnet, das bei dieser Ausführungsform als einfacher Rundstab ausgebildet ist. Der Durchmesser der beiden Rundstäbe 130 ist derart ausgewählt, dass sich diese in einem Grundzustand des Verbindungselements zentral berühren und durch die Endflächen der Madenschrauben 114, 115 abgestützt werden. Die Verstellachse V verläuft also durch die Kontaktlinie der Rundstäbe 130 und den Längsschlitz 124 hindurch. Die Endflächen der Madenschrauben 114, 115 bilden somit jeweils eine Wirkfläche 120, die mit beiden Rundstäben 130 gleichermaßen in Eingriff steht. Genauer gesagt steht die Wirkfläche 120 jeweils in Kontakt mit einer Angriffsfläche 122, die durch einen Oberflächenbereich der Rundstäbe 130 gebildet ist.

Bei einem Eindrehen einer der Madenschrauben 114, 115 in den Grundkörper 100 wird von der zugehörigen Wirkfläche 120 auf beide Rundstäbe 130 eine Druckkraft ausgeübt. Diese wiederum übertragen die Druckkraft auf die beiden Unterabschnitte 118A, 118B des zweiten Klemmabschnitts 118. Dadurch, dass die Wirkfläche 120 der Madenschrauben 114, 115 jeweils in Bezug auf die Verstellachse V geneigt ist und die Rundstäbe 130 gewölbte Angriffsflächen 122 zur Aufnahme der Kraft bereitstellen, erfolgt die Vermittlung der Druckkraft von der jeweiligen Madenschraube 114, 115 auf den zweiten Klemmabschnitt 118 nicht rein linear in Richtung der Verstellachse V, sondern auch quer dazu. Bei der dargestellten Ausführungsform bedeutet dies, dass einerseits der zweite Klemmabschnitt 118 gegenüber dem ersten Klemmabschnitt 116 gemäß Fig. 1 nach oben bewegt wird, und dass andererseits die beiden Unterabschnitte 118A, 118B relativ zueinander in einer seitlich auswärts gerichteten Bewegung verschoben werden. Es erfolgt gewissermaßen eine Auffächerung der Druckkraft über einen ausgedehnten Bereich von radialen Richtungen. Insgesamt tritt somit beim Eindrehen einer der Madenschrauben 114, 115 eine relativ gleichmäßige Aufweitung des Querschnitts des Grundkörpers 100 über dessen gesamten Umfang auf.

Der zweite Klemmabschnitt 118 muss nicht notwendigerweise durch den Längsschlitz 124 in die Unterabschnitte 118A, 118B unterteilt sein. Bei einem einstückig ausgebildeten zweiten Klemmabschnitt 118 würde die quer zur Verstellachse V gerichtete Kraftkomponente immerhin eine gewisse Auswölbung der zwei dem ersten Klemmabschnitt 116 zugewandten Seitenflächen des zweiten Klemmabschnitts 118 herbeiführen, was ebenfalls eine Aufweitung des Querschnitts des Grundkörpers 100 quer zur Verstellachse V bewirken würde.

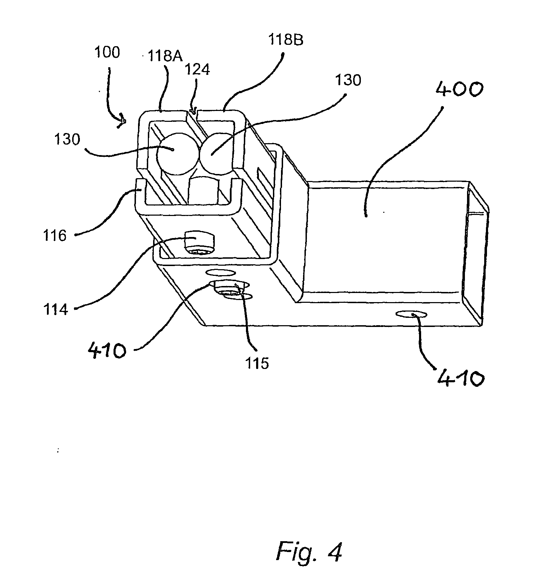

Der Gebrauch eines Verbindungselements gemäß der vorstehend beschriebenen Ausführungsform wird anhand von Fig. 4 beschrieben, welche einen Grundkörper 100 zeigt, der teilweise in einen hier abgewinkelt ausgebildeten Rohrabschnitt 400 eines Handlaufsystems eingesteckt ist. Die Außenabmessungen des Grundkörpers 100 sind derart auf den Innendurchmesser des Rohrabschnitts 400 abgestimmt, dass das Verbindungselement bei gelösten oder fehlenden Madenschrauben 114, 115 leicht in den Rohrabschnitt 400 einsteckbar, aber in diesem geführt ist. Bei gelösten oder fehlenden Madenschrauben 114, 115 befindet sich der Grundkörper 100 somit in einem Montagezustand, welcher ein Einstecken und Herausziehen des Grundkörpers 100 in Bezug auf den Rohrabschnitt 400 ermöglicht. An der Unterseite des Rohrabschnitts 400 sind Durchgangslöcher 410 vorgesehen, um eine Betätigung der Madenschrauben 114, 115 zu ermöglichen. Ein Einschrauben der Madenschraube 115 in den Grundkörper 100 um ein vorbestimmtes Maß überführt den Grundkörper 100 von dem Montagezustand in einen aufgeweiteten Verbindungszustand, in welchem der eingesteckte Abschnitt des Grundkörpers durch Klemmkräfte herausziehsicher in dem Rohrabschnitt gehalten ist.

Bei einem stirnseitigen Verbinden zweier Rohrabschnitte 400 wird demgemäß zunächst der Grundkörper 100 eines Verbindungselements bis zur Hälfe in den ersten Rohrabschnitt 400 eingesteckt. Anschließend wird die Madenschraube 115 um einen definierten Betrag angezogen, um den Querschnitt des Grundkörpers 100 aufzuweiten und diesen in dem Rohrabschnitt 400 zu verklemmen. Anschließend wird ein zweiter Rohrabschnitt herangeführt und auf den nicht eingesteckten Abschnitt des Grundkörpers 100 aufgesteckt. Anschließend wird auch die Madenschraube 114 angezogen, um den in den zweiten Rohrabschnitt eingesteckten Abschnitt des Grundkörpers 100 ebenfalls zu verklemmen. Die beiden Rohrabschnitte 400 sind nun stabil miteinander verbunden. Durch die gleichmäßige Aufweitung des Grundkörpers 100 in mehreren Richtungen sind die beiden Rohrabschnitte 400 konzentrisch ausgerichtet und die Stufenbildung an den Stoßkanten ist minimiert.

Die Verbindung kann jederzeit gelöst werden, indem die Madenschrauben 114, 115 herausgedreht werden, wodurch sich aufgrund der elastischen Ausbildung des Grundkörpers 100 und insbesondere der elastischen Kopplung von erstem und zweitem Klemmabschnitt 116, 118 der Querschnitt verringert und die Verklemmung aufgehoben wird. Bei einem zu montierenden Handlaufsystem können auf diese Weise beliebig viele Rohrabschnitte 400 lösbar miteinander verbunden werden. Im dargestellten Beispiel ist jeweils eine der Madenschrauben 114, 115 einem zu verbindenden Rohrabschnitt 400 zugeordnet, weshalb auch jeder zu verbindende Rohrabschnitt 400 ein an entsprechender Stelle vorgesehenes Durchgangsloch 410 zur Betätigung der Madenschrauben 114, 115 aufweist. Alternativ kann es aber auch ausreichend sein, lediglich eine Madenschraube im Zentralbereich des Grundkörpers 100 vorzusehen und die zu verbindenden Rohrabschnitte 400 jeweils im Bereich der Stoßkante mit einer halbkreisförmigen Ausnehmung zu versehen, welche bei sich stirnseitig berührenden Rohrabschnitten 400 eine kreisförmige Öffnung zur Betätigung der Madenschraube bilden.

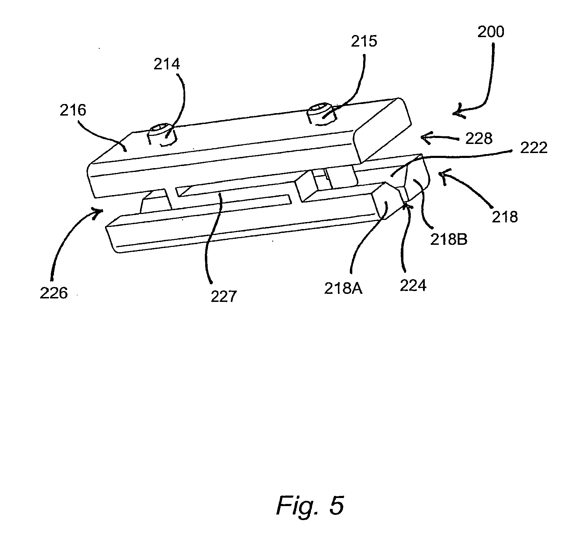

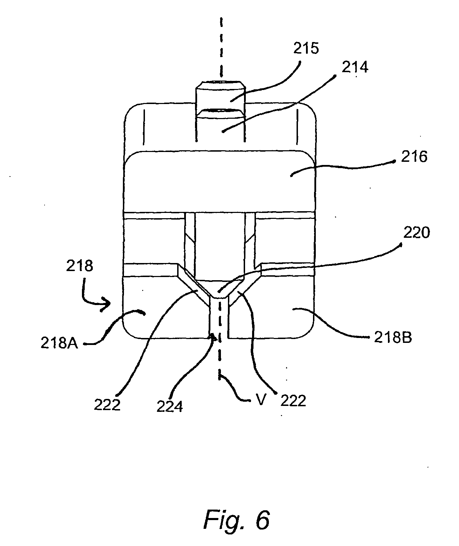

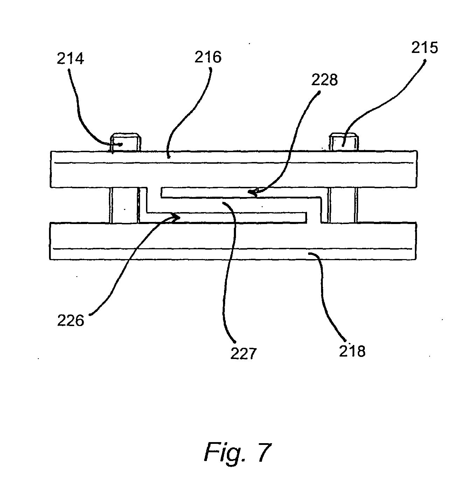

In den Fig. 5 bis 7 ist eine zweite Ausführungsform eines erfindungsgemäßen Verbindungselements dargestellt. Der Grundkörper 200 ist hier nicht als Vierkantrohr, sondern als geschlitzter Vierkantblock aus einem elastischen Material ausgebildet. Ähnlich wie bei der ersten Ausführungsform ist der Grundkörper 200 in einen ersten Klemmabschnitt 216 und einen zweiten Klemmabschnitt 218 mit zwei Unterabschnitten 218A, 218B unterteilt. Es sind wiederum zwei Madenschrauben 214, 215 mit konisch geformten Endflächen vorgesehen, welche jeweils in einem durchgehenden Gewindeloch des ersten Klemmabschnitts 216 vorgesehen sind. Ein Längsschlitz 224 erstreckt sich durch den gesamten Grundkörper 200 hindurch, wobei die Verstellachse V durch den Längsschlitz 224 hindurch verläuft. An jeder Seite des Grundkörpers 200 sind sich stirnseitig durch den Grundkörper 200 hindurch erstreckende Sackschlitze 226, 228 ausgebildet, welche in Richtung der Verstellachse V gegeneinander versetzt sind und in einem vorbestimmten Zentralbereich des Grundkörpers 200 überlappen. Durch die Anordnung der Sackschlitze sind auch hier S-förmige Verbindungsstreben 227 geschaffen, welche für eine kontinuierliche, aber elastische Kopplung des ersten Klemmabschnitts 216 mit dem zweiten Klemmabschnitt 218 sorgen. Aufgrund der Trennung der Unterabschnitte 218A, 218B durch den Längsschlitz 224 sind diese quer zu der Verstellachse V relativ zueinander beweglich, jedoch nur in einem begrenzten Ausmaß, da sie durch die Verbindungsstreben 227 mit dem einstückigen ersten Klemmabschnitt 216 gekoppelt sind.

Durch die massive, blockartige Ausbildung des Grundkörpers 200 sind bei dem Verbindungselement gemäß der zweiten Ausführungsform keine zusätzlichen Übertragungsstücke 130 notwendig. Stattdessen weisen die Unterabschnitte 218A, 218B jeweils eine relativ zu der Verstellachse V geneigte Angriffsfläche 222 auf, welche an die Wirkfläche 220 der Madenschrauben 214, 215 angepasst ist. Bei einem Einschrauben der Madenschrauben 214, 215 in den Grundkörper 200 erfolgt eine Kraftübertragung von der Wirkfläche 220 auf die beiden geneigten Angriffsflächen 222. Die Kraftübertragung mittels der korrespondierenden schrägen Flächen führt wiederum zu einer quer zu der Verstellachse V gerichteten zusätzlichen Kraftkomponente und somit zu einer gleichmäßigen Aufweitung des Grundkörpers 200 in mehreren Richtungen.

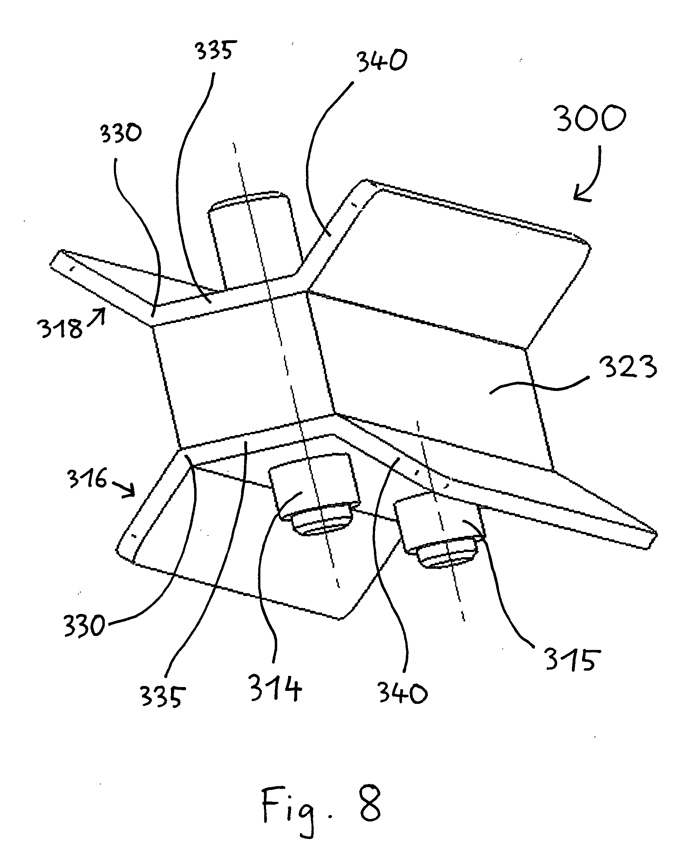

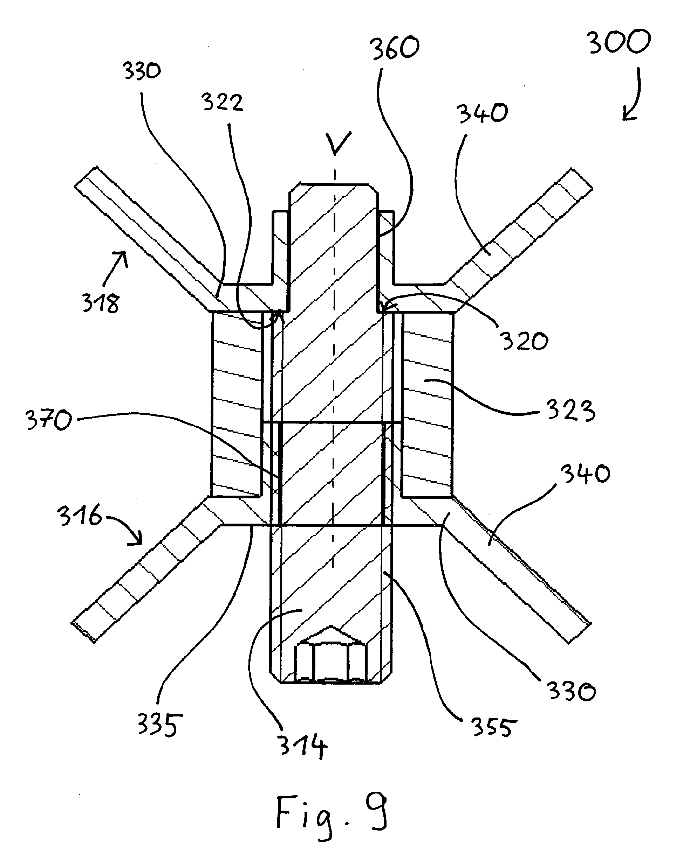

In den Fig. 8 bis 11 ist eine dritte Ausführungsform eines erfindungsgemäßen Verbindungselements dargestellt. Der Grundkörper 300 umfasst hier einen ersten Klemmabschnitt 316 und einen zweiten Klemmabschnitt 318, die jeweils als im Wesentlichen U-förmiges Profilelement aus elastischem Material mit schräg abstehenden Schenkeln ausgebildet sind. Die Profilelemente 316, 318 sind Metallstreifen, welche einander gegenüberliegend angeordnet und durch ein Kopplungsstück 323 miteinander verbunden sind. Jedes der Profilelemente 316, 318 weist zwei in Längsrichtung parallel zueinander verlaufende Biegekanten 330 auf. Durch die Biegekanten 330 sind die Profilelemente 316, 318 jeweils in einen rechtwinklig zur Verstellachse V (siehe Fig. 9) ausgerichteten Zentralabschnitt 335 und zwei in Bezug auf die Verstellachse V gegensätzlich nach außen geneigte Vorsprungsabschnitte 340 unterteilt. Die Vorsprungsabschnitte 340 stehen jeweils in einem Winkel von etwa 45° in Bezug auf die Verstellachse nach außen ab und bilden insgesamt vier Spreizflügel, die dem Grundkörper 300 einen X-förmigen Querschnitt verleihen.

Das Kopplungsstück 323 ist bei der dargestellten Ausführungsform ein Block aus elastischem Material, beispielsweise ein Schaumstoffblock, der jeweils im Bereich des Zentralabschnitts 335 an dem ersten Profilelement 316 und dem zweiten Profilelement 318 angeklebt ist. Dadurch werden die beiden Profilelemente 316, 318 stets elastisch zusammengehalten, um so den Grundkörper 300 zu bilden.

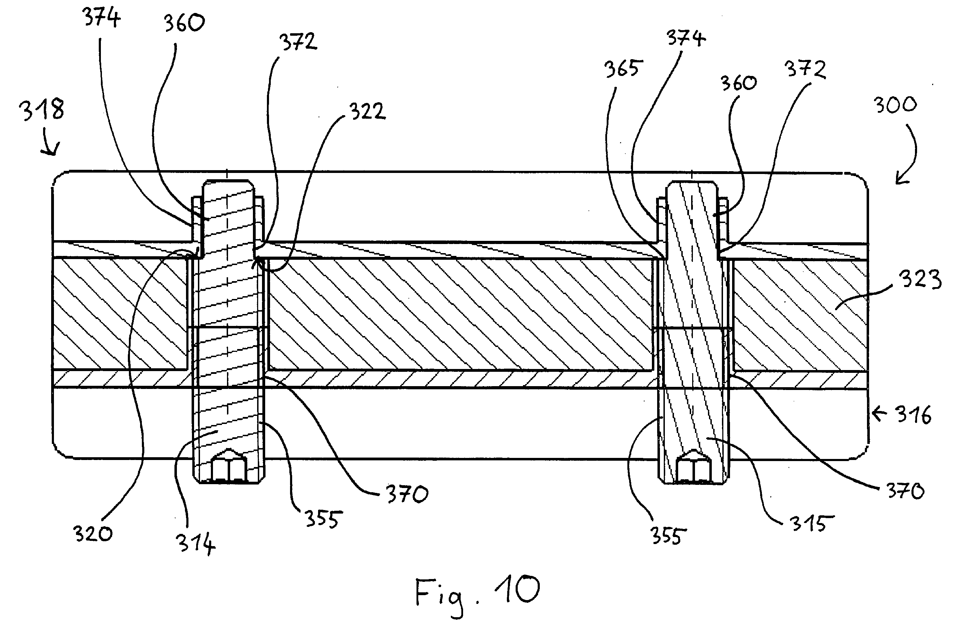

Als Verstellelemente 314, 315 sind bei dem Verbindungselement gemäß der dritten Ausführungsform zwei Madenschrauben vorgesehen, die jeweils einen Gewindeabschnitt 355 und einen zylindrischen Führungsabschnitt 360 aufweisen. Der Führungsabschnitt 360 ist gegenüber dem Gewindeabschnitt 355 verjüngt, so dass sich eine Ansatzschulter 365 (Fig. 10) ausbildet, welche eine Wirkfläche 320 bildet. Im ersten Profilelement 316 sind zwei durchgehende Gewindelöcher 370 ausgebildet, in welche die Madenschrauben 314, 315 mit ihrem Gewindeabschnitt 355 eingeschraubt werden können. Im zweiten Klemmabschnitt 318 sind den Gewindelöchern 370 gegenüberliegende Durchgangsbohrungen 372 ausgebildet, um die Führungsabschnitte 360 der Madenschrauben 314, 315 aufzunehmen. Zwischen den Gewindelöchern 370 und den Durchgangsbohrungen 372 sind in dem Schaumstoffblock 323 Kanäle ausgebildet, um den Durchtritt der Madenschrauben 314, 315 zu ermöglichen. Vorzugsweise sind die Gewindelöcher 370 und die Durchgangsbohrungen 372 mit einem Fließbohrer gefertigt, um jeweils einen ringförmigen Auswurf an der Außenseite der Gewindelöcher 370 und der Durchgangsbohrungen 372 zu schaffen, welcher der Bildung einerseits eines axial verlängerten Gewindes mit mehreren Gewindegängen und andererseits eines erweiterten Aufnahmeabschnitts 374 für den Führungsabschnitt 360 dient.

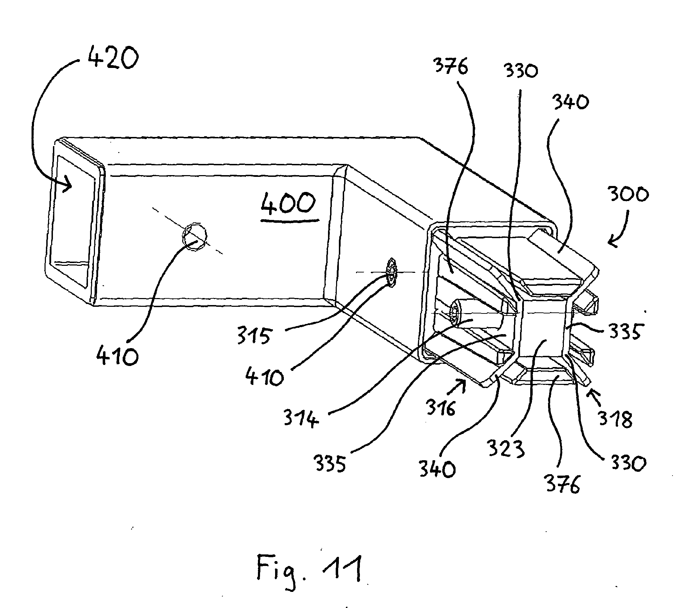

Beim Gebrauch werden die beiden Madenschrauben 314, 315 in die Gewindelöcher 370 in dem ersten Profilelement 316 eingeschraubt. Dabei gerät der Führungsabschnitt 360 in Eingriff mit dem Aufnahmeabschnitt 374 und gleitet in diesem, bis die Ansatzschulter 365 gegen den Rand der Durchgangsbohrung 372 stößt. Der Bereich, in welchem die Ansatzschulter 365 an dem zweiten Profilelement 318 anstößt, bildet also die Angriffsfläche 322 (siehe Fig. 9). Ein weiteres Einschrauben der Madenschrauben 314, 315 bewirkt dann eine Druckkraft auf den Zentralabschnitt 335 des zweiten Profilelements 318. Aufgrund der nach außen abstehenden Spreizflügel 340 werden dabei einerseits die beiden Profilelemente 316, 318 gegeneinander in Richtung der Verstellachse V verschoben, andererseits wird eine leichte Deformierung der Profilelemente 316, 318 hervorgerufen, so dass sich wie bei der ersten und der zweiten Ausführungsform eine Erweiterung des Grundkörpers 300 sowohl in Richtung der Verstellachse V als auch quer dazu ergibt. Wenn der Grundkörper 300 in einem als Vierkantrohr ausgebildeten Rohrabschnitt 400 (Fig. 11) aufgenommen ist und die entsprechende Madenschraube 314, 315 angezogen wird, spreizen sich die Klemmabschnitte 316, 318 mit ihren Spreizflügeln 340 in die Ecken des Rohrabschnitts 400 und bewirken eine zentrierende Befestigung des Grundkörpers 300 im Rohrabschnitt 400. Aufgrund der Schrägstellung der Spreizflügel 340 wird also die durch die Madenschrauben 314, 315 vermittelte Kraft in jeder Ecke des Rohrabschnitts 400 in eine Komponente parallel zur Verstellachse V und in eine Komponente rechtwinklig dazu aufgespalten. Die Zentrierwirkung ist bei dieser Ausführungsform besonders ausgeprägt, da die Klemmkraft symmetrisch auf alle vier Eckbereiche des Rohrabschnitts 400 verteilt ist und jeweils vom Zentrum des Grundkörpers 300 weg gerichtet ist. Ein zusätzlicher Vorteil ergibt sich dadurch, dass zwischen den abstehenden Spreizflügeln 340 Freiräume zwischen der Innenwand des Rohrabschnitts 400 und dem Grundkörper 300 vorhanden sind. Diese Freiräume können beispielsweise zum Aufnehmen von Führungsstreben 376 (siehe Fig. 11) genutzt werden, die an dem Rohrabschnitt 400 befestigt oder einstückig mit diesem ausgebildet sind. Derartige Führungsstreben 376 können als Einführhilfe für das Verbindungselement dienen und die Stabilität der Verbindung erhöhen.

Zusätzlich können Abdeckkappen (nicht dargestellt) aus dichtendem Material vorgesehen sein, welche an den Eckbereichen Längsschlitze aufweisen und daher derart auf einen aus dem Rohrabschnitt 400 ragenden Abschnitt des Grundkörpers 300 aufsteckbar sind, dass die Klemmflächen der Spreizflügel 340 freiliegen. Derartige Abdeckkappen können zur Abdichtung des Innenraums des Rohrabschnitts 400 eingesetzt werden, wenn das zugehörige Handlaufsystem beispielsweise im Sanitärbereich eingesetzt werden soll.

Bei den dargestellten Ausführungsformen ist für jede der beiden Madenschrauben 114, 115, 214, 215, 314, 315 des Grundkörpers 100, 200, 300 ein zugehöriges Durchgangsloch 410 an dem entsprechenden Rohrabschnitt 400 vorgesehen. Der Grundkörper 100, 200, 300 könnte jedoch auch derart in den abgewinkelten Rohrabschnitt 400 eingeführt werden, dass eine der Madenschrauben 114, 115, 214, 215, 314, 315 durch die stirnseitige Öffnung 420 eines Schenkels des abgewinkelten Rohrabschnitts 400 betätigt werden kann, sodass für die entsprechende Madenschraube kein Durchgangsloch 410 vorzusehen ist. Auf diese Weise kann eine optisch ansprechendere Gestaltung des Rohrabschnitts 400 erreicht werden.

Die Vorteile des erfindungsgemäßen Verbindungselements kommen bei einem aus Vierkantrohren zusammengesetzten Handlaufsystem besonders zur Geltung. Es sind jedoch je nach Anwendung auch andere Gestaltungsmöglichkeiten denkbar. Ferner kann der Grundkörper 100, 200, 300 auch in mehr als zwei Klemmabschnitte unterteilt sein und die Angriffsflächen 120, 220, 320 des zweiten Klemmabschnitts 118, 218, 318 können komplexere Formen aufweisen. Wichtig ist lediglich die Ausbildung der Kraftübertragungsflächen an den Verstellelementen und Klemmabschnitten derart, dass der Verschiebungsbewegung des zweiten Klemmabschnitts 118, 218, 318 eine transversale Komponente aufgeprägt wird und somit eine in mehrere Richtungen weisende Aufweitung des Grundkörpers 100, 200, 300 herbeigeführt wird.

### Bezugszeichenliste

- 100, 200, 300: Grundkörper
- 114, 214, 314: erstes Verstellelement, Madenschraube
- 115, 215, 315: zweites Verstellelement, Madenschraube
- 116, 216, 316: erster Klemmabschnitt
- 118,218,318: zweiter Klemmabschnitt
- 118A,118B: Unterabschnitte
- 218A, 218B: Unterabschnitte
- 120, 220, 320: Wirkfläche
- 122, 222, 322: Angriffsfläche
- 124, 224: Längsschlitz
- 126, 226: Sackschlitz
- 127, 227: Verbindungsstrebe
- 128, 228: Sackschlitz
- 130: Übertragungsstück, Rundstab
- 323: Kopplungsstück, Schaumstoffblock
- 330: Biegekante
- 335: Zentralabschnitt
- 340: Vorsprungsabschnitt, Spreizflügel
- 355: Gewindeabschnitt
- 360: Führungsabschnitt
- 365: Ansatzschulter
- 370: Gewindeloch
- 372: Durchgangsbohrung
- 374: Aufnahmeabschnitt
- 376: Führungsstreben
- 400: Rohrabschnitt
- 410: Durchgangsloch
- 420: stirnseitige Öffnung

- V: Verstellachse

## Patentansprüche

1. Verbindungselement zum Verbinden eines Rohrabschnitts (400) mit wenigstens einem weiteren Element, insbesondere zum stirnseitigen Verbinden zweier Handlaufabschnitte, mit
einem in den Rohrabschnitt (400) einsteckbaren Grundkörper (100, 200, 300), und
wenigstens einem Verstellelement (114, 214, 314), durch das der Grundkörper (100, 200, 300) zwischen einem Montagezustand, welcher ein Einstecken und Herausziehen des Grundkörpers (100, 200, 300) in Bezug auf den Rohrabschnitt (400) ermöglicht, und einem aufgeweiteten Verbindungszustand, in welchem der eingesteckte Abschnitt des Grundkörpers (100, 200, 300) herausziehsicher in dem Rohrabschnitt (400) gehalten ist, verstellbar ist, wobei
der Grundkörper (100, 200, 300) wenigstens einen ersten Klemmabschnitt (116, 216, 316) und einen zweiten Klemmabschnitt (118, 218, 318) aufweist, welche relativ zueinander beweglich sind, wobei das Verstellelement (114, 214, 314) in dem ersten Klemmabschnitt (116, 216, 316) entlang einer vorbestimmten Verstellachse (V) beweglich gelagert ist und eine Wirkfläche (120, 220, 320) aufweist,
die mit einer dem zweiten Klemmabschnitt (118, 218, 318) zugeordneten Angriffsfläche (122, 222, 322) in Eingriff bringbar ist, um den Querschnitt des Grundkörpers (100, 200, 300) sowohl in Richtung der Verstellachse (V) als auch quer dazu zu erweitern.

2. Verbindungselement nach Anspruch 1,
**dadurch gekennzeichnet, dass**
die Wirkfläche (120, 220) des Verstellelements und/oder die dem zweiten Klemmabschnitt zugeordnete Angriffsfläche (122, 222) gewölbt ausgebildet oder in Bezug auf die Verstellachse (V) geneigt ist.

3. Verbindungselement nach Anspruch 1 oder 2,
**dadurch gekennzeichnet, dass**
der zweite Klemmabschnitt (118, 218) wenigstens zwei separate Unterabschnitte (118A, 118B, 218A,218B) mit diesen entsprechend zugeordneten Angriffsflächen umfasst, wobei die Unterabschnitte (118A, 118B, 218A, 218B) quer zu der Verstellachse (V) relativ zueinander beweglich sind.

4. Verbindungselement nach zumindest einem der vorstehenden Ansprüche,
**dadurch gekennzeichnet, dass**
das Verstellelement (114, 214) eine Madenschraube mit einer konisch geformten Endfläche ist, die in einem durchgehenden Gewindeloch des ersten Klemmabschnitts (118, 218) aufgenommen ist.

5. Verbindungselement nach Anspruch 4,
**dadurch gekennzeichnet, dass**
die Querschnittsform der dem zweiten Klemmabschnitt (218) zugeordneten Angriffsfläche (222) wenigstens abschnittsweise der Querschnittsform der konisch geformten Endfläche der Madenschraube (214) entspricht.

6. Verbindungselement nach zumindest einem der vorstehenden Ansprüche,
**dadurch gekennzeichnet, dass**
der Grundkörper (100, 200, 300) ein weiteres Verstellelement (115, 215, 315) umfasst, wobei jedes der zwei Verstellelemente (114, 115, 214, 215, 314, 315) einem von zwei zu verbindenden Rohrabschnitten (400) zugeordnet ist.

7. Verbindungselement nach zumindest einem der vorstehenden Ansprüche,
**dadurch gekennzeichnet, dass**
der erste und der zweite Klemmabschnitt (116, 216, 316, 118, 218, 318) elastisch miteinander gekoppelt sind.

8. Verbindungselement nach zumindest einem der vorstehenden Ansprüche,
**dadurch gekennzeichnet, dass**
der erste und der zweite Klemmabschnitt (116, 216, 118, 218) auf jeder Seite durch zwei sich stirnseitig durch den Grundkörper (100, 200) hindurch erstreckende Sackschlitze (126, 226, 128, 228) voneinander getrennt sind, welche in Richtung der Verstellachse (V) gegeneinander versetzt sind und in einem vorbestimmten Zentralbereich des Grundkörpers (100, 200) überlappen.

9. Verbindungselement nach zumindest einem der vorstehenden Ansprüche,
**dadurch gekennzeichnet, dass**
zwischen der Wirkfläche (120) des Verstellelements (114) und dem zweiten Klemmabschnitt (118) wenigstens zwei Übertragungsstücke (130) angeordnet sind, welche eine von der Wirkfläche (120) des Verstellelements (114) ausgeübte Druckkraft auf den zweiten Klemmabschnitt (118) übertragen.

10. Verbindungselement nach Anspruch 9,
**dadurch gekennzeichnet, dass**
die Übertragungsstücke (130) einen von der Rechteckform abweichenden, insbesondere einen kreisförmigen oder dreieckigen Querschnitt aufweisen.

11. Verbindungselement nach zumindest einem der vorstehenden Ansprüche,
**dadurch gekennzeichnet, dass**
der Grundkörper (100, 200, 300) zumindest bereichsweise aus einem elastischen Material, insbesondere aus Metall, Zink-Druckguss, Edelstahl oder aus glasfaserverstärktem Kunststoff, besteht.

12. Verbindungselement nach zumindest einem der vorstehenden Ansprüche,
**dadurch gekennzeichnet, dass**
der Grundkörper (300) wenigstens zwei, insbesondere vier nach außen abstehende Vorsprungsabschnitte (340) aufweist.

13. Verbindungselement nach Anspruch 12,
**dadurch gekennzeichnet, dass**
die Vorsprungsabschnitte (340) als Spreizflügel ausgebildet sind, welche sich von einem im Wesentlichen rechtwinklig zur Verstellachse (V) ausgerichteten Zentralabschnitt (335) des ersten Klemmabschnitts (316) und/oder des zweiten Klemmabschnitts (318) weg erstrecken und in Bezug auf die Verstellachse (V) geneigt sind.

14. Verbindungselement nach Anspruch 13,
**dadurch gekennzeichnet, dass**
der erste Klemmabschnitt (316) und der zweite Klemmabschnitt (318) jeweils als im Wesentlichen U-förmige Profilelemente ausgebildet sind, welche jeweils schräg voneinander weg weisende Schenkelabschnitte aufweisen.

15. Verbindungselement nach zumindest einem der vorstehenden Ansprüche,
**dadurch gekennzeichnet, dass**
das Verstellelement (314) als Madenschraube ausgebildet ist, die einen Gewindeabschnitt (355) und einen zylindrischen Führungsabschnitt (360) aufweist, wobei zwischen dem Gewindeabschnitt (355) und dem zylindrischen Führungsabschnitt (360) eine die Wirkfläche (320) bildende Ansatzschulter (365) ausgebildet ist.
